## Europäisches Patentamt

## European Patent Office

## Office européen des brevets

(11) Veröffentlichungsnummer: **0 255 042**
**B1**

(12)

# EUROPÄISCHE PATENTSCHRIFT

(45) Veröffentlichungstag der Patentschrift:
**11.10.89**

(51) Int. Cl.⁴: **B23Q 16/08, B23H 7/26**

(21) Anmeldenummer: **87110665.4**

(22) Anmeldetag: **23.07.87**

(54) **Spannvorrichtung für ein Werkzeug an einer Werkzeugmaschine, insbesondere einer Senkerodiermaschine.**

(30) Priorität: **29.07.86 DE 3625608**
**21.11.86 DE 3639801**

(43) Veröffentlichungstag der Anmeldung:
**03.02.88 Patentblatt 88/5**

(45) Bekanntmachung des Hinweises auf die Patenterteilung:
**11.10.89 Patentblatt 89/41**

(84) Benannte Vertragsstaaten:
**AT BE CH DE ES FR GB IT LI LU NL SE**

(56) Entgegenhaltungen:
EP-A- 0 088 921
DE-A- 3 234 669
FR-A- 2 217 589
GB-A- 1 094 067
US-A- 3 317 008
US-A- 3 741 573

(73) Patentinhaber: **3R Management ab, Sorterargatan 1,
S-162 26 Vällingby(SE)**

(72) Erfinder: **Ramsbro, Börje, Bravallavägen 22,
S-182 63 Djursholm(SE)**

(74) Vertreter: **Zinngrebe, Horst, Dr.rer.nat.,
Saalbaustrasse 11, D-6100 Darmstadt(DE)**

## Beschreibung

Die Erfindung betrifft eine Spannvorrichtung für ein Werkzeug für eine Werkzeugmaschine, insbesondere eine Senkerodiermaschine, mit einem Spannfutter, welches aus seiner Unterseite vorstehende Leisten aufweist, die mit Anlageflächen zur Ausrichtung des Werkzeugs in einer x-Richtung und einer y-Richtung, die quer zur Mittellinie des Spannfutters weisen, versehen sind, wobei von der Unterseite mehrere Pfosten vorstehen, welche an ihren freien Stirnflächen in der x-y-Ebene sich erstreckende Referenzflächen aufweisen, mit einem Werkzeughalter, der zur Anlage an die Pfosten eine plane Oberfläche aufweist, und mit einem im Werkzeughalter verankerbaren Zugbolzen.

Aus der europäischen Patentanmeldung mit der Veröffentlichungsnummer 111 092 ist eine Kupplungsvorrichtung bekannt, die auch bei einer Senkerodiermaschine eingesetzt werden kann. Dabei erfolgt die Bearbeitung eines Werkstückes funkenerosiv mittels einer Elektrode, welche bei der bekannten Kupplungsvorrichtung mit dem Spannfutter einer Pinole der Senkerodiermaschine verbunden werden muß. Bei einer Senkerodiermaschine ist ein bezüglich der Maschine festes Koordinatensystem vorgegeben, dessen x-y-Ebene quer zu der in z-Richtung ausgeführten Senkbewegung der Pinole liegt. Die Mittellinie des Spannfutters erstreckt sich dabei in z-Richtung. Zur Lagepositionierung der Elektrode in dem Koordinatensystem sieht die bekannte Kupplungsvorrichtung vor, daß auf das Werkzeug (Elektrode) mit Referenzflächen versehene Pfosten aufgesetzt werden, die beim Einspannen des Werkzeugs gegen eine am Spannfutter vorgesehene Fläche zur Fixierung in z-Richtung anliegen. Ferner weist die Unterseite des Spannfutters Prismenzapfen, die zur Fixierung der Elektrode in der x-y-Ebene in Öffnungen einer Mitnehmerscheibe eingreifen, welche auf der Elektrode befestigt ist. Dabei dringt ein zentraler Zapfen des Spannfutters in ein Mittelloch und ein exzentrischer Zapfen in einen Schlitz der Mitnehmerscheibe ein.

Demgegenüber liegt der Erfindung die Aufgabe zugrunde, die eingangs genannte Spannvorrichtung derart auszubilden, daß das Werkzeug ohne Zwischenschaltung einer Mitnehmerscheibe beliebig oft wiederholbar und jeweils mit außerordentlich hoher Genauigkeit in einer vorgegebenen Lage am Spannfutter positioniert werden kann. Insbesondere soll ein Referenzsystem geschaffen werden, das eine genaue Herstellung der Elektrode außerhalb der Maschine erlaubt, ohne daß die fertige Elektrode in der Maschine justiert werden muß.

Ferner soll mit der Erfindung die genannte Spannvorrichtung mit einer Kupplungsvorrichtung ausgerüstet werden, welche ein schnelles Kuppeln und Lösen des Werkzeugs mit bzw. von dem Spannfutter gestattet.

Dazu ist erfindungsgemäß vorgesehen, daß bei der eingangs genannten Spannvorrichtung am Spannfutter zwei Leistenpaare exzentrisch und winkelmäßig zueinander versetzt ausgebildet sind, und daß in die plane Oberfläche zwei Paare von auf die Leisten ausgerichteten Nuten mit zur Anlage an die Leisten vorgesehenen, elastischen Lippen geschnitten sind. Damit liegen die Gegenreferenzen für die x-, y- und z-Richtung auf dem Werkzeughalter in einer gemeinsamen Ebene, nämlich in seiner Oberfläche, was eine einfache und zugleich äußerst exakte Herstellung erlaubt.

Das Werkzeug kann auf der der Oberfläche gegenüberliegenden Seite am Werkzeughalter befestigt und außerhalb der Werkzeugmaschine exakt auf seine vorgesehene Form bearbeitet werden. Dazu empfiehlt es sich in Weiterbildung der Erfindung, wenn Seitenflächen- oder kanten des Werkzeughalters exakt auf die x- bzw. y-Richtung ausgerichtet sind.

Das fertige Werkzeug mit Werkzeughalter wird sodann mit Hilfe des in das Spannfutter eindringenden Zugbolzens am Spannfutter eingespannt, wobei die Oberfläche des Werkzeughalters als Gegenreferenz für die Pfosten und die Nuten als Gegenreferenz für die Leisten dienen.

Zweckmäßig sind am Spannfutter zwei Paare von Leisten derart vorgesehen, daß die Verbindungslinie eines Leistenpaares die Verbindungslinie des anderen Leistenpaares rechtwinklig kreuzt und die Leisten eines Paares bezüglich der Mitte der Oberfläche einander gegenüberliegen.

Mit besonderem Vorteil besitzt der Werkzeughalter wenigstens zwei Seitenflächen, von denen eine zu einem ersten Paar der Nuten und die andere zu dem zweiten Paar der Nuten exakt parallel verläuft. Dies erleichtert die Verwendung des Werkzeughalters zur Vermessung des Werkzeugs innerhalb des maschineneigenen Koordinatensystems außerhalb der Maschine.

In bevorzugter Ausführungsform der Erfindung ist vorgesehen, daß der Werkzeughalter Arretierelemente für den Zugbolzen besitzt, die wenigstens einen in eine Mittelbohrung des Werkzeughalters vorstehenden Steg aufweisen und daß am unteren Ende des Zugbolzens wenigstens eine radial vorstehende Nase zum Untergreifen des Stegs ausgebildet ist. Ferner kann am Zugbolzen ein axial verschiebbarer Schieber in der Nähe seines unteren Endes gehalten sein. Durch einfaches Einsetzen des unteren Endes des Zugbolzens in die Mittelbohrung und Verdrehen des Zugbolzens bis zum Untergreifen seiner Nase unter den Steg läßt sich der Zugbolzen schnell und sicher mit dem Werkzeughalter koppeln und durch den beispielsweise in eine Vertiefung des Werkstückhalters eingreifenden Schieber arretieren.

In bevorzugter Ausgestaltung der Erfindung braucht der Zugbolzen nur um etwa 45° gedreht zu werden, wenn zwischen je zwei in Umfangsrichtung der Mittelbohrung benachbarten Nuten je ein Steg ausgebildet ist. Um eine Beeinflussung der am Werkzeughalter ausgebildeten Referenzmittel durch die Arretierung des Zugbolzens auszuschließen, erweist es sich als zweckmäßig, den Boden der Mittelbohrung wenigstens um die Stärke der Nasen tiefer zu legen als Basis der Nuten. Ferner erweist es sich als zweckmäßig, am unteren Ende des Zugbolzens vier umfangmäßig gleich beabstandete Nasen vorzusehen, wobei die umfangmäßige Breite jeder Nase nicht größer ist als der umfangmäßige Zwischenraum zwischen zwei benachbarten Stegen, insbesondere als die lichte Weite der Nuten.

Besonders vorteilhaft ist die Ausbildung des Schiebers als ein den Zugbolzen umfassender Ring, von welchem sich wenigstens ein, bevorzugt vier umfangmäßig gleich beabstandete Finger axial in Richtung auf das untere Ende des Zugbolzens erstrecken, deren jeweilige umfangmäßige Breite dem Abstand zwischen benachbarten Nasen entspricht.

Die Handhabung des Schiebers bzw. des Rings wird vereinfacht, wenn der Schieber bzw. der Ring auf dem Zugbolzen unverdrehbar gehalten ist. Dazu empfiehlt es sich, am Umfang des Zugbolzens von seinem unteren Ende ausgehend vier gleich beabstandete Führungsnuten auszubilden, wobei je einer der Finger mit einer radialen Verdickung in je eine der Führungsnuten eintaucht. Zum Einrasten des Rings zur Arretierung der Kupplung zwischen Zugbolzen und Werkzeughalter ist wenigstens eine der Führungsnuten in axialer Richtung zweckmäßig kürzer ist als die anderen Führungsnuten, wobei dann wenigstens der in die kürzere Führungsnut eintauchende Finger radial elastisch ist.

Weitere bevorzugte Ausgestaltungen der Erfindung sind in den Unteransprüchen angegeben.

Die Erfindung hat besondere Bedeutung für die Herstellung einer Elektrode für die funkenerosive Bearbeitung eines Werkstückes mittels einer Senkerodiermaschine. Die Erfindung wird daher für diese Anwendung nachstehend anhand des in der beigefügten Zeichnung dargestellten Ausführungsbeispiels im einzelnen beschrieben. Es zeigen:

Fig. 1 eine Draufsicht auf die Unterseite eines maschinenseitigen Spannfutters;

Fig. 2 eine Draufsicht auf die Oberseite eines Elektrodenhalters ohne Zugbolzen;

Fig. 3 eine Ansicht des an das Spannfutter mittels eines Zugbolzens angesetzten Elektrodenhalters, teilsweise im Schnitt;

Fig. 4 eine Einzelheit aus Figur 3 in vergrößertem Maßstab;

Fig. 5 eine Ansicht des Elektrodenhalters mit eingesetztem Zugbolzen;

Fig. 6 eine Schnittansicht des Spannfutters mit angesetztem Elektrodenhalter;

Fig. 7: einen Schnitt durch den Elektrodenhalter längs der Linie II-II aus Fig. 2;

Fig. 8: die Ansicht eines Zugbolzens mit Arretierring, teilweise im Schnitt, sowie des in x-Richtung geschnittenen Elektrodenhalters;

Fig. 9: eine Ansicht des um 90° gedrehten Zugbolzens aus Fig. 8 mit eingerastetem Arretierring und des in y-Richtung geschnittenen Elektrodenhalters; und

Fig. 10: eine Ansicht des Zugbolzens mit Arretierring von unten.

Die Spannvorrichtung besteht im wesentlichen aus drei Bauteilen, nämlich einem im ganzen mit 1 bezeichneten Spannfutter mit einer zentrischen Zugbolzenaufnahme und Referenzelementen an seiner Unterseite, einem im ganzen mit 2 bezeichneten Ekektrodenhalter mit planer Oberfläche und Nuten an seiner Oberseite, sowie einem im Elektrodenhalter 2 verankerbaren Zugbolzen 3.

Der Elektrodenhalter 2 ist in Draufsicht quadratisch und besitzt zwei Paare paralleler, gegenüberliegender Seitenflächen 22, 24, 26, 28, von denen die Seitenflächen 22, 24 des ersten Paares sich genau in x-Richtung und die Seitenflächen 26, 28 des zweiten Paares sich genau in y-Richtung erstrecken. Die plan geschliffene Oberfläche 30 liegt parallel zur x-y-Ebene und damit rechtwinkelig zu den Seitenflächen 22, 24, 26, 28. In die Oberseite des Elektrodenhalters 2 sind zwei Paare von Nuten 32, 34, 36, 38 von gleichem, jeweils rechtwinkeligem Querschnitt eingebracht, von denen jede Nut 32, 34 des ersten Paares symmetrisch zu der die x-Richtung enthaltenden Mittelebene 4 des Elektrodenhalters 2 gelegt ist und sich zwischen einer Mittelbohrung 40 des Elektrodenhalters 2 und der Seitenfläche 26 bzw. 28 erstreckt. Jede Nut 36, 38 des zweiten Paares ist symmetrisch zu der die y-Richtung enthaltenden Mittelebene 5 des Elektrodenhalters 2 gelegt und erstreckt sich zwischen der Mittelbohrung 40 und der Seitenfläche 22 bzw. Am Übergang zu der Oberfläche 30 bilden die Nut 32 bezüglich der Mittelebene 4 gegenüberliegende Kanten 32a, 32b und die Nut 34 gegenüberliegende Kanten 34a, 34b. Entsprechend finden sich am Übergang zur Oberfläche 30 an der Nut 36 bezüglich der Mittelebene 5 gegenüberliegende Kanten 36a, 36b und an der Nut 38 gegenüberliegende Kanten 38a, 38b. Die Nuten 32, 34, 36, 38 unterteilen die Oberfläche 30 in vier Oberflächenabschnitte 30a bis 30d, von denen der Oberflächenabschnitt 30a in dem durch die Seitenflächen 22 und 26, der Oberflächenabschnitt 30b in dem durch die Seitenflächen 26 und 24, der Oberflächenabschnitt 30c in dem durch die Seitenflächen 24 und 28 und der Oberflächenabschnitt 30d in dem durch die Seitenflächen 28, 22 jeweils gebildeten Eckenabschnitt der Elektrodenhalter-Oberseite angeordnet ist.

In jede Flanke jeder Nut, die von einer der genannten Kanten ausgeht, ist in etwa einem Drittel der Nuttiefe ein leicht nach unten gebogener Einschnitt in das Material des Elektrodenhalters 2 eingeschnitten, der etwa eine der Nutbreite entsprechende Tiefe hat. Jeder Einschnitt hat eine Länge, die wenigstens gleich der Länge der zugehörigen Kante ist. So gehen von der Nut 32 die beiden gegenüberliegenden Einschnitte 31a und 31b, von der Nut 34 die beiden gegenüberliegenden Einschnitte 33a, 33b, von der Nut 36 die beiden gegenüberliegenden Einschnitte 35a, 35b und von der Nut 38 die beiden gegenüberliegenden Einschnitte 37a, 37b aus. In Figur 2 sind die inneren Enden der Einschnitte mit den vorstehend genannten Bezugszeichen versehen.

Die Einschnitte ermöglichen, daß das zwischen ihnen und dem benachbarten Oberflächenabschnitt verbleibende Elektrodenhaltermaterial die Form einer in z-Richtung elastischen Lippe annimmt, welche mit der jeweiligen Kante versehen ist. Die die Nut 32 beiderseits begrenzenden, gegenüberliegenden Lippen sind mit 32c, 32d, die die Nut 34 begrenzenden Lippen mit 34c, 34d, die die Nut 36 begrenzenden Lippen mit 36c, 36d und die die Nut 38 begrenzenden Lippen mit 38c, 38d bezeichnet.

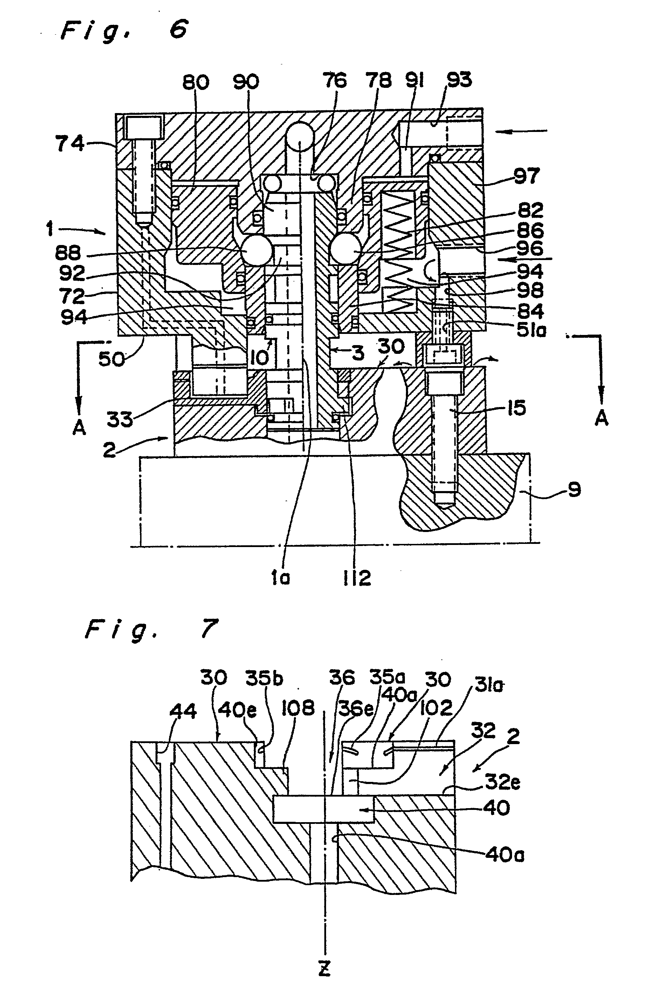

Wie Figur 6 zeigt, kann an der Unterseite des Elektrodenhalters 2 eine Elektrode 9 befestigt werden. Eine Befestigungsmöglichkeit besteht darin, in jeden der vier Oberflächenabschnitte 30a bis 30d je eine Durchgangsbohrung für einen Schraubbolzen, beispielsweise den Schraubbolzen 15, einzubringen, mit dessen Hilfe die Elektrode 9 an den Elektrodenhalter 2 angeschraubt werden kann. Die genaue Lage jeder Durchgangsbohrung 42, 44, 46, 48 wird weiter unten erläutert. Jede Durchgangsbohrung 42, 44, 46, 48 ist an der Oberseite des Elektrodenhalters 2 so erweitert, daß bei angeschraubter Elektrode 9 keiner der Schraubbolzen über die Oberfläche 30 vorsteht.

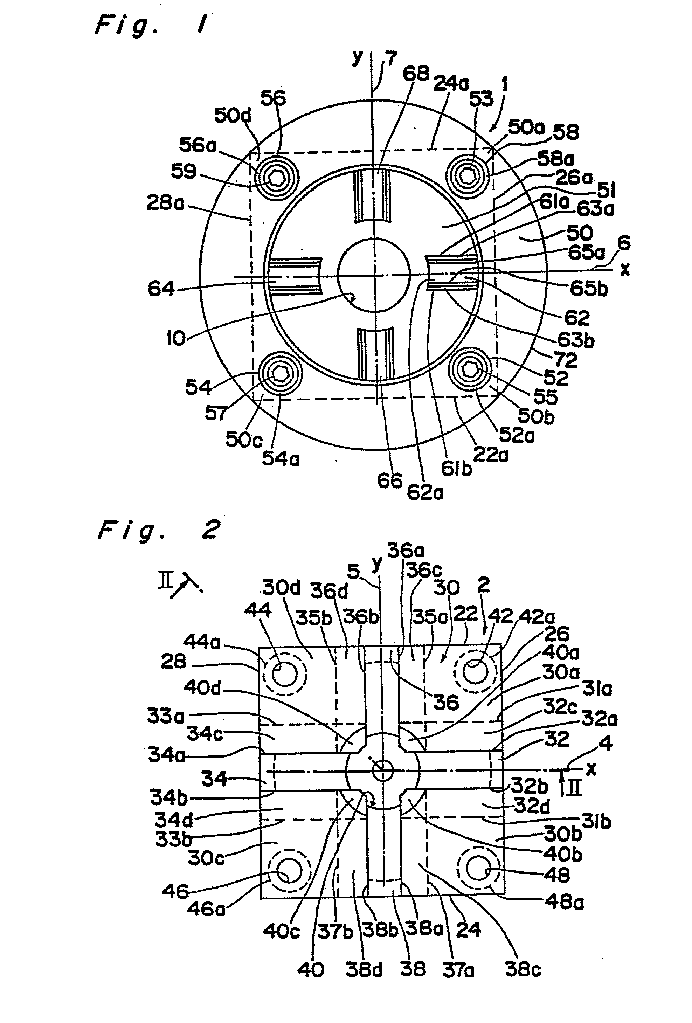

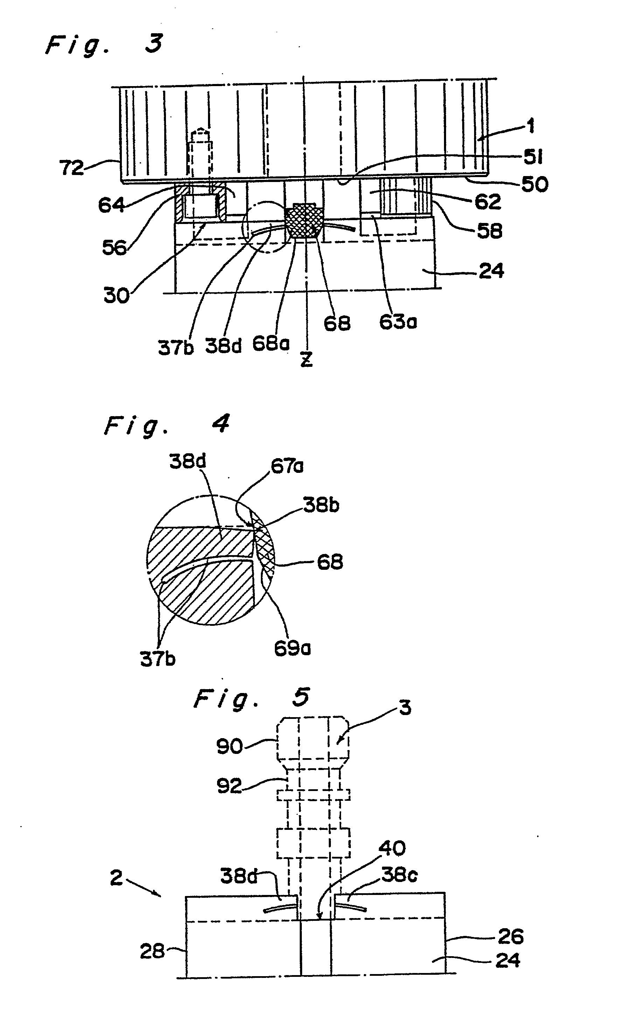

Das mit der Senkerodiermaschine verbundene Spannfutter 1 besitzt eine Unterseite, die gemäß Figuren 1 und 3 wie folgt gestaltet ist. Das Spannfutter 1 ist an der Unterseite von zylindrischer Außenkontur. An der Unterseite ist eine Ringfläche 50 exakt so plan geschliffen, daß sie genau parallel zur x-y-Ebene und damit quer zur Mittellinie 1a des Spannfutters 1 liegt. Die Ringfläche 50 umschließt eine Kreisfläche 51, an deren Oberflächengüte keine besonderen Anforderungen gestellt werden müssen. In der Mitte der Kreisfläche 51 mündet die Zugbolzenaufnahme 10. Die quadratische Oberfläche 30 des Elektrodenhalters 2 ist in Bezug auf den Außendurchmesser der Ringfläche 50 sowie auf den Außendurchmesser der Kreisfläche 51 so in x- und y-Richtung bemessen, daß bei einer Projektion der Seitenflächen 22, 24, 26, 28 auf die Unterseite des Spannfutters diese ganz innerhalb der Ringfläche 50 und ganz außerhalb der Kreisfläche 51 liegen, wie in Figur 1 gestrichelt angedeutet ist.

Zwischen den Projektionen 22a, 24a, 26a, 28a, der jeweiligen Seitenflächen 22, 24, 26, 28 auf die Ringfläche 50 und der Peripherie der Kreisfläche 51 liegen in den vier Feldern, die sich durch die die x-Richtung enthaltende Mittelebene 6 und die die y-Richtung enthaltende Mittelebene 7 der Ringfläche 50 ergeben, jeweils Ringflächenabschnitte 50a, 50b, 50c, 50d. Aus jedem der vier Ringflächenabschnitte steht je ein im Querschnitt zylindrischer Pfosten 52, 54, 56, 58 vor. Die Pfosten können mit dem die Ringfläche 50 tragenden Spannfutterteil 72 einteilig sein. Alternativ sind die Pfosten 52, 54, 56, 58 zur Aufnahme je einer Maschinenschraube 53, 55, 57, 59 mittig so durchbohrt, daß die Maschinenschrauben über eine stirnseitige, ringförmige Referenzfläche 52a, 54a, 56a, 58a nicht vorstehen. Die Referenzflächen sind durch entsprechende Abschrägungen zu den Durchbohrungen und zu der Außenperipherie des jeweiligen Pfostens sehr schmal gehalten. Ferner sind die Referenzflächen 52a, 54a, 56a und 58a plan geschliffen, haben gleichen Abstand zur Ringfläche 50 und liegen genau parallel zur x-y-Ebene. Jede einzelne der Referenzflächen 52a, 54a, 56a und 58a wie auch ihre Gesamtheit bilden daher eine Referenz in z-Richtung für die genaue Positionierung der Elektrode 9 über den Elektrodenhalter 2, wenn letzterer mit der Oberfläche 30 gegen die Referenzflächen angezogen ist.

Aus der Kreisfläche 51 stehen zwei Paare von Leisten 62, 64, 66 und 68 von gleichem, jeweils im wesentlichen rechtwinkeligem Querschnitt zwischen der Zugbolzenaufnahme 10 und der Peripherie der Kreisfläche 51 vor, von denen jede Leiste 62, 64 des ersten Paares symmetrisch zu der Mittelebene 6 und jede Leiste 66, 68 des zweiten Paares symmetrisch zur Mittelebene 7 gelegt ist. Die Leisten sind aus dem Material des Spannfutterteiles 72 herausgearbeitet. Die Außenkonturen der Leisten sind gleich, sodaß nur diejenige der Leiste 62 genauer beschrieben wird.

Die Leiste 62 hat drei Paare von ebenen Seitenflächen, die sich quer zur Peripherie der Kreisfläche und symmetrisch zur Mittelebene 6 erstrecken: Die an die Kreisfläche 51 angrenzenden Seitenflächen 61a, 61b verlaufen im wesentlichen senkrecht zur Kreisfläche 51. Die an die Seitenflächen 61a, 61b angrenzenden Seitenflächen 63a, 63b sind nur wenig zur Mittelebene 6 hin geneigt, während die sich zwischen der Stirnfläche 62a der Leiste 62 und den Seitenflächen 63a, 63b erstreckenden Seitenflächen 65a, 65b einen größeren Winkel mit der Mittelebene 6, beispielsweise ungefähr 45°, einschließen. Die Seitenflächen 63a, 63b dienen als Referenzflächen für die genaue Lagepositionierung des Elektrodenhalters 2 in der x-y-Ebene. Dazu hat der Übergang von den Seitenflächen 61a, 61b zu den Seitenflächen 63a, 63b von der Ringfläche 50 einen Abstand, der kleiner ist als der Abstand der Referenzflächen 52a, 54a, 56a, 58a zu der Ringfläche 50. Andererseits ist der Abstand des Übergangs von den wenig geneigten Seitenflächen 63a, 63b zu den stärker geneigten Seitenflächen 65a, 65b zu der Ringfläche 50 größer als der Abstand jeder der Referenzflächen 52a, 54a, 56a, 58a zu der Ringfläche 50. Selbstverständlich liegt die Stirnfläche 62a in solcher Höhe über der Ringfläche 50, daß bei an das Spannfutter 1 angesetztem Elektrodenhalter 2 der Boden der Nut 32 von der Leiste 62 nicht berührt wird.

Wenn der Elektrodenhalter 2 an das Spannfutter 1 durch den Zugbolzen 3 herangezogen wird, liegen die Referenzflächen 52a, 54a, 56a, 58a auf ringförmigen Stützflächen 42a, 44a, 46a, 48a der Oberflächenab schnitte 30a, 30b, 30c, 30d auf, so daß der Elektrodenhalter 2 in z-Richtung eindeutig positioniert ist. Gleichzeitig dringen die Leisten 62, 64, 66, 68 in die Nuten 32, 34, 36, 38 mit den stärker geneigten Seitenflächen 65a, 65b ein, während die wenig geneigten Referenzflächen 63a, 63b die Kanten 32a, 32b kontaktieren und im Zuge des Spannvorgangs die Lippen 32c, 32d axial einwärts bis zur Einnahme der erwähnten, in z-Richtung fixierten Lage des Elektrodenhalters biegen (Fig. 4). Durch diese Art Eingriff der Leisten in die Nuten ergibt sich bei der genauen Positionierung des Elektrodenhalters 2 in z-Richtung gleichzeitig dessen genaue Positionierung in x-Richtung und in y-Richtung. Dabei schließt die dynamische Fixierung des Elektrodenhalters 2 in x- und y-Richtung (aufgrund der Elastizität der Lippen 32c, 32d; 34c, 34d; 36c, 36d; 38c, 38d) jegliches Spiel aus. Für die Herstellung der Referenzen am Elektrodenhalter 2 ist vorteilhaft, daß diese sämtlich in einer gemeinsamen Ebene liegen, so daß die Kanten 32a, 32b; 34a, 34b; 36a, 36b; 38a, 38b gleichzeitig mit der Bildung der Oberfläche 30 sich ergeben, ohne daß die Einstellung der den Elektrodenhalter herstellenden Maschine geändert werden muß.

Die Kanten 32a, 32b, 34a, 34b, 36a, 36b, 38a, 38b wie auch die die Referenzflächen aufweisenden Teile der Leisten und die Pfosten mit den Referenzflächen können besonders gehärtet sein; in Figur 3 ist zu erkennen, daß die Leiste 68 zu diesem Zweck einen Aufsatz 68a aus Hartmetall order Wolframkarbid besitzt, an welchem die Referenzflächen 67a, 69b ausgebildet sind.

Diese Art der Lagefixierung des Elektrodenhalters 2 hat den Vorteil, daß der Elektrodenhalter 2 eine ebene Oberfläche 30 besitzt, die ebenso wie die Ebenen und genau auf der x-Richtung bzw. der y-Richtung ausgerichteten Seitenkanten 22, 24, 26, 28 als Bezugsflächen zur Vermessung der Elektrode 9 bei deren Herstellung außerhalb der Senkerodiermaschine herangezogen werden können.

Jede Durchgangsbohrung 42, 44, 46, 48 ist in einem Bereich des zugehörigen Oberflächenabschnittes 30a, 30b, 30c, 30d angeordnet, der ganz innerhalb der Stützflächen 42a, 44a, 46a, 48a liegt. Dadurch wird die genaue Fixierung des Elektrodenhalters 2 in z-Richtung unmittelbar auf eine entsprechende Positionierung der Elektrode 9 übertragen.

Im dargestellten Ausführungsbeispiel der Erfindung mündet jede der Nuten 32, 34, 36, 38 in die Mittelbohrung 40 des Elektrodenhalters 2. Die zwischen je zwei benachbarten Nuten verbleibenden Wandabschnitte 40a, 40b, 40c, 40d der Mittelbohrung 40 stehen längs eines Teiles ihrer axialen Stärke in die Mittelbohrung 40 vor (Figur 2 und 7) zur Bildung von Zungen 102, 104, 106, 108, die als Arretierelemente zum Befestigen des Zugbolzens 3 an dem Elektrodenhalter 2 dienen.

Gemäß Fig. 6 weist das Spannfutter 1 ein becherförmiges Spannfutterteil 72 auf, an dessen Unterseite die Ringfläche 50 ausgebildet ist. Das Spannfutterteil 72 ist mittels Bolzen an einer maschinenseitigen Platte 74 befestigt. Die Platte 74 besitzt ein zentrales Sackloch 76, das auf die Zugbolzenaufnahme 10 ausgerichtet ist und von einer ringförmigen Wand 78 umgeben ist. Zwischen der Wand 78 und der Innenseite des Spannfutterteils 72 ist ein Ringraum vorhanden, in welchem ein Haltering 80 axial verschiebbar ist. Eine sich am inneren Boden des Spannfutterteils 72 abstützende Feder 82 beaufschlagt den Haltering 80 in eine obere Verschlußstellung, in welcher der Haltering 80 in Figur 6 eingezeichnet ist. Der Haltering 80 ist an der Außenfläche der Wange 78 und einer gegenüberliegenden Innenfläche des Spannfutterteils 72 bei seiner axialen Bewegung geführt. Eine weitere Führung des Halteringes 80 ist an der Außenfläche eines Führungsringes 84 gegeben, welcher in der Mittelbohrung des Spannfutterteils 72 die Zugbolzenaufnahme 10 definierend befestigt und sich in Richtung auf die Wand 78 erstreckt. Zwischen der Wand 78 und dem Führungsring 84 sind um die Peripherie der Zugbolzenaufnahme 10 gleich verteilte Kugeln 86, 88 gehalten, welche aufgrund einer mit konischen Flächen versehenen Einsenkung im Haltering 80 bei dessen Abwärtsbewegung radial nach außen ausweichen können und dann den Weg für den Kopf 90 des Zugbolzens 3 freigeben. Unterhalb des Kopfes 90 weist der Zugbolzen 3 eine Verjüngung 92 auf, in welche die Kugeln 86, 88 bei Aufwärtsbewegung des Halterings 80 von diesem hineingedrückt werden und damit den Zugbolzen 3 axial halten.

Erfindungsgemäß ist unterhalb des Halterings 80 eine ringförmige Druckluftkammer 94 gebildet, welche über einen Kanal 96, der den Mantel 97 des Spannfutterteils 72 durchdringt, an eine Druckluftquelle angeschlossen werden kann. Ferner ist die Druckluftkammer 94 mit 4 den Boden des Spannfutterteils 74 durchsetzenden Kanälen 98 verbunden, welche sich in Druckluftkanäle 51a der Maschinenschrauben 53, 55, 57, 59 fortsetzen. Wird der Kanal 96 an eine Druckluftquelle angeschlossen, wird der Haltering 80 zusätzlich zu der Wirkung der Feder 82 in Schließstellung gedrückt, wobei gleichzeitig durch die Luftkanäle 51a Druckluft entweicht und beim Ansetzen des Elektrodenhalters 2 die Stützflächen 42a, 44a, 46a, 48a von eventuell darauf befindlichen Teilchen reinigt. Wenn der Elektrodenhalter 2 an das Spannfutter 1 fest angesetzt wird, kann durch die Druckluftkanäle 51a keine Druckluft mehr entweichen, so daß sich der Schließdruck für den Haltering 80 erhöht. Dadurch steigt die Haltekraft des Futters für Elektrodenhalter mit Elektrode und Zugbolzen auf etwa das Dreifache.

Mit dieser Einrichtung wird erreicht, daß die Feder 82 nicht mehr daraufhin ausgelegt zu werden braucht, daß sie alleine den zum Andrücken des Elektrodenhalters 2 mit Elektrode 9 gegen die Referenzflächen erforderlichen Anpressdruck aufbringen muß. Vielmehr braucht die Feder 82 nur nach Sicherheitsgesichtspunkten ausgelegt zu werden, die sicherstellen, daß bei Ausfall der Druckluftquelle der Elektrodenhalter 2 samt Zugbolzen 3 nicht aus dem Spannfutter 1 unbeabsichtigt herausfällt.

Zur Entnahme des Elektrodenhalters 2 mit Zugbolzen 3 wird die Oberseite des Halterings 80 über Kanäle 91, 93 an eine Druckluft quelle angeschlossen, deren Druck die Kraft der Feder 82 überwindet (wenn der Schließ-Luftdruck weggenommen ist) und den Haltering 80 in seine untere Offenstellung überführt, wobei die Kugeln 86, 88 in die Einsenkung des Halterings 80 nach außen entweichen können und den Weg für den Kopf 90 des Zugbolzens 3 freigeben.

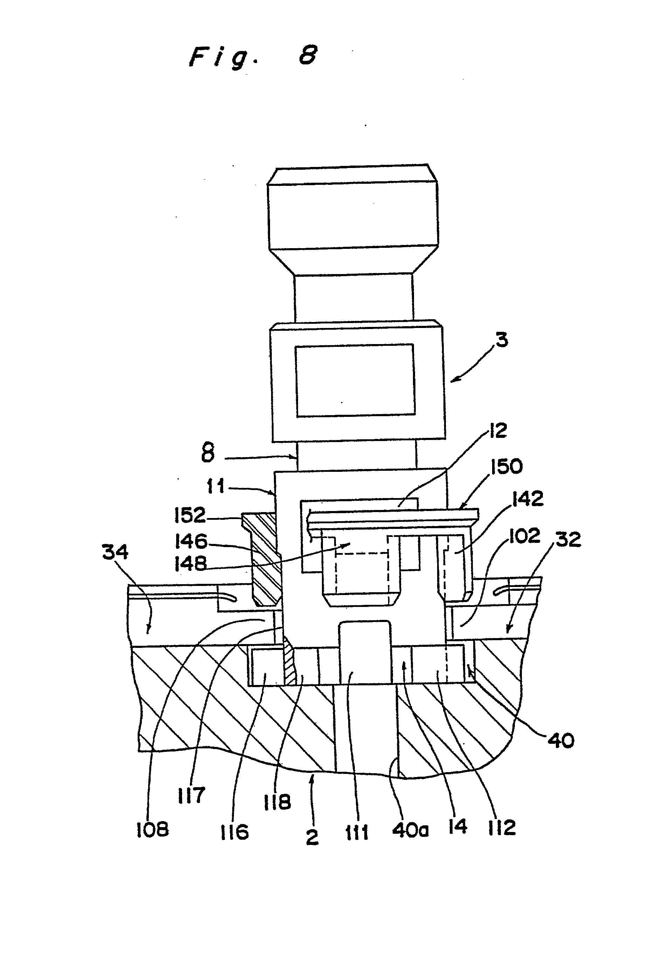

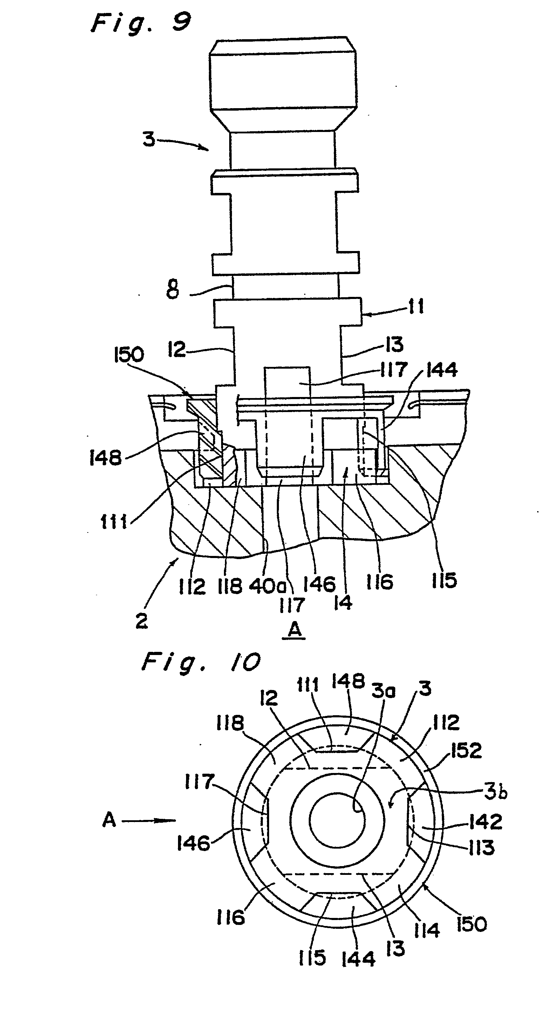

Von dem Zugbolzen 3, der bis auf einige radiale Einschnitte im wesentlichen zylindrische Gestalt hat, wird hier nur sein unterer Abschnitt unterhalb einer Ringnut 8 für einen nicht dargestellten Dichtring beschrieben (Fig. 8 - 10). Der zylindrische untere Abschnitt 11 besitzt an zwei gegenüberliegenden Umfangsabschnitten je eine Abflachung 12, 13, an denen der Zugbolzen 3 beispielsweise von der Gabel eines Greifers erfaßt und von dieser transportiert werden kann. Unterhalb der Abflachungen 12, 13 hat der Zugbolzen 3 eine Länge, die etwas größer als die Tiefe der Mittelbohrung 40 ist. Am unteren Ende 14 des Zugbolzens 3 stehen radial nach außen vier umfangmäßig gleich beabstandete Nasen 112, 114, 116, 118 vor, die in Umfangsrichtung eine Länge haben, die nicht größer ist als die Breite einer der Nuten 32, 34, 36, 38. In radialer Richtung stehen die Nasen 112, 114, 116, 118 nicht weiter vor als die lichte Weite der Mittelbohrung 40 in ihrem untersten Abschnitt beträgt. Zwischen je zwei benachbarten Nasen 112, 114, 116, 118 sind ausgehend von der unteren Stirnfläche 3b des Zugbolzens 3 Führungsnuten 111, 113, 115, 117 in Form von Abflachungen der zylindrischen Außenkontur des Abschnittes 11 ausgebildet. Die beiden gegenüberliegenden Führungsnuten 111, 115, welche beziehentlich sich parallel zu den Abflachungen 12 und 13 erstrecken, enden in axialer Richtung mit Abstand vor der zugehörigen Abflachung 12, 13, wie am Beispiel der Führungsnut 111 Fig. 8 erkennen läßt. Die beiden anderen, gegenüberliegenden Führungsnuten 113, 117 reichen am Abschnitt 11 in axialer Richtung weiter von der Stirnfläche 3b weg und enden in der Höhe der Abflachungen 12, 13, wie Figuren 8 und 9 an der Führungsnut 117 erkennen lassen.

Der untere Abschnitt 11 des Zugbolzens 3 ist von einem im ganzen mit 150 bezeichneten Schieber umfaßt, der im dargestellten Ausführungsbeispiel die Form eines mit Fingern versehenen Arretierrings beispielsweise aus Kunststoff besitzt. Der Ring 150 ist auf dem unteren Abschnitt 11 in axialer Richtung verschiebbar und und weist oberhalb der Finger eine umlaufende, radial vorstehende Griffleiste 152 auf. Von der Griffleiste 152 erstrecken sich abwärts vier in Umfangsrichtung gleich beabstandete Finger 142, 144, 146, 148, die mit ihren Innenflächen am Mantel des Abschnittes 11 anliegen. In Umfangsrichtung besitzen die Finger 142, 144, 146, 148 jeweils eine Breite, die den Zwischenraum zwischen je zwei benachbarten Nasen 112, 114, 116, 118 praktisch vollständig ausfüllt. An der Rückseite weist jeder Finger 142, 144, 146, 148 von seinem unteren Ende her eine Verdickung auf, so daß jede der Verdickungen in je eine der Führungsnuten 111, 113, 115, 117 eintauchen kann. Dabei bleiben die gegenüberliegenden Finger 142, 146 über ihre rückseitigen Verdickungen mit den zugehörigen Führungsnuten 113, 115 ständig im Eingriff, während die gegenüberliegenden radial elastischen Finger 144, 148 mit ihren rückseitigen Verdickungen nur in der in Fig. 9 dargestellten arretierenden Stellung in die kürzeren Führungsnuten 111, 115 eingreifen, in der in Fig. 8 dargestellten entarretierten, angehobenen Stellung jedoch nach oben aus den Führungsnuten 111, 113 herausgeglitten sind. Die größte Breite jedes der Finger 142, 144, 146, 148 ist jedenfalls kleiner als die Breite einer der Nuten 32, 34, 36, 38. Aufgrund des Eingriffs der rückseitigen Verdickungen der Finger 142, 146 in den Führungsnuten 113, 117 ist der Ring 150 auf dem unteren Abschnitt 11 des Zugbolzens 3 unverdrehbar, jedoch axial verschieblich gehalten.

Zum Kuppeln des mit dem Ring 150 versehenen Zugbolzens 3 mit dem Elektrodenhalter 2 wird der untere Abschnitt 11 so in die Mittelbohrung 40 eingeführt, daß jede der Nasen 112, 114, 116, 118 in den durch die Nuten 32, 34, 36, 38 gebildeten Zwischenraum zwischen den Zungen 102, 104, 106, 108 bis zum Boden der Mittelbohrung 40 eindringen kann. Der Ring 150, falls er sich nicht von vornherein in der angehobenen Stellung befindet, wird durch Aufstoßen der Unterseite der Finger 142, 144, 146, 148 auf die Zungen 102, 104, 106, 108 beim weiteren Einschieben des Zugbolzens 3 in die Mittelbohrung in die in Fig. 3 dargestellte angehobene Stellung axial auf dem Zugbolzen 3 verschoben. Sodann wird der Zugbolzen 3 in der Mittelbohrung 40 um einen Winkel von etwa 45°, jedenfalls soweit gedreht, daß die Finger 142, 144, 146, 148 in die durch die Nuten 32, 34, 36 gebildeten Zwischenräume zwischen den Zungen eindringen können. Der Ring 150 wird sodann von Hand in die in Fig. 9 dargestellte Arretierstellung auf dem unteren Abschnitt 11 nach unten geschoben, so daß die Finger sich zwischen den Zungen befinden und ein weiteres Drehen des Zugbolzens 3 verhindert.

In dieser Stellung des Zugbolzens 3 unterfaßt je eine der Leisten 142, 144, 146, 148 je einen der Zungen 102, 104, 106, 108. Der Zugbolzen 3 ist auf diese Weise mit dem Elektrodenhalter 2 gekoppelt und kann dann mit diesem in das Spannfutter einer Senkerodiermaschine eingeführt werden.

Zum Entkuppeln wird der Ring 150 von Hand an der Griffleiste 152, die oberhalb der Nuten und der oberen, radial erweiterten Abschnitte der Mittelbohrung leicht erreichbar ist, auf dem unteren Abschnitt 11 axial nach oben verschoben, wobei die Finger 144, 148 aufgrund ihrer radialen Elastizität leicht aus den Führungsnuten 111, 115 freikommen können. Der Zugbolzen 3 kann dann soweit gedreht werden, daß seine Nasen aus dem Eingriff mit den Zungen freikommen, so daß der Zugbolzen 3 dann ohne Behinderung vom Elektrodenhalter 2 nach oben abgehoben werden kann.

Der vorstehende beschriebene Arretierungsmechanismus für die Kopplung des Zugbolzens 3 mit dem Elektrodenhalter 2 ist nicht auf die spezielle Ausgestaltung des Ringes 150 beschränkt. An seiner Stelle genügt auch ein einfacher auf dem unteren Abschnitt 11 axial verschiebbar befestigter Schieber, der zur Arretierung entweder in eine der Nuten oder auch in eine radiale Ausnehmung an einem der Zungen in Umfangsrichtung formschlüssig eingreifen kann.

Es liegt ferner im Rahmen der Erfindung, den Ring 150 oder den Schieber in Richtung auf die untere in Fig. 9 dargestellte Arretierstellung durch ein oder mehrere Federelemente elastisch zu beaufschlagen, so daß der Ring 150 oder der Schieber beim Einsetzen des unteren Abschnittes 11 in die Mittelbohrung 40 gegen Federdruck nach oben ausweichen und nach Drehen des Zugbolzens 3 selbsttätig unter der Wirkung der Feder in Arretierstellung übergehen kann. Ferner ist es möglich, das Zusammenwirken der Nasen und Zungen derart zu gestalten, daß der Zugbolzen 3 nach Art eines Bajonettverschlusses am Elektrodenhalter 2 lösbar verankert werden kann.

**Patentansprüche**

1. Spannvorrichtung für ein Werkzeug (9) für eine Werkzeugmaschine, insbesondere eine Senkerodiermaschine, mit einem Spannfutter (1), welches aus seiner Unterseite vorstehende Leisten (62, 64, 66, 68) aufweist, die mit Anlageflächen (63a, 63b) zur Ausrichtung des Werkzeugs (9) in einer x-Richtung und einer y-Richtung, die quer zur Mittellinie (1a) des Spannfutters (1) weisen, versehen sind, wobei von der Unterseite mehrere Pfosten (52, 54, 56, 58) vorstehen, welche an ihren freien Stirnflächen in der x-y-Ebene sich erstreckende Referenzflächen (52a, 54a, 56a, 58a) aufweisen, mit einem Werkzeughalter (2), der zur Anlage an die Pfosten eine plane Oberfläche (30) aufweist, und mit einem im Werkzeughalter (2) verankerbaren Zugbolzen (3), dadurch gekennzeichnet, daß am Spannfutter (1) zwei Leistenpaare (62, 64; 66, 68) exzentrisch und winkelmäßig zueinander versetzt ausgebildet sind, und daß in die plane Oberfläche zwei Paare von auf die Leisten (62, 64, 66, 68) ausgerichteten Nuten (32, 34; 36, 38) · mit zur Anlage an die Leisten vorgesehenen, elastischen Lippen (32c, 32d; 34c, 34d; 36c, 36d; 38c, 38d) geschnitten sind.

2. Vorrichtung nach Anspruch 1, dadurch gekennzeichnet, daß der Werkzeughalter zwei Seitenflächen (22, 24; 26, 28) aufweist, von denen eine (22, 24) zu einem ersten Paar der Nuten (32, 34) und die andere (26, 28) zu dem zweiten Paar der Nuten (36, 38) exakt parallel verläuft.

3. Vorrichtung nach Anspruch 1 oder 2, dadurch gekennzeichnet, daß die Pfosten (52, 54, 56, 58) gleich beabstandet auf einer Ringfläche (50) an der Unterseite des Spannfutters befestigt sind.

4. Vorrichtung nach einem der vorstehenden Ansprüche, dadurch gekennzeichnet, daß jede Referenzfläche (52a, 54a, 56a, 58a) eine schmale, ringförmige Fläche ist.

5. Vorrichtung nach einem der vorstehenden Ansprüche, dadurch gekennzeichnet, daß jeder Pfosten einen axialen Druckluftkanal (51a) umschließt, der an eine mit dem Spannfutter (1) verbundene Druckluftquelle angeschlossen ist.

6. Vorrichtung nach einem der vorstehenden Ansprüche, dadurch gekennzeichnet, daß in dem Spannfutter (1) eine die Zugbolzenaufnahme (10) umgebende Haltevorrichtung (80) für den Zugbolzen (3) ausgebildet ist, welche zum Spannen des Zugbolzens (3) eine Druckluftkammer (94) aufweist, die mit einer Druckluftquelle verbunden ist.

7. Vorrichtung nach Anspruch 5 oder 6, dadurch gekennzeichnet, daß die Druckluftkanäle (51a) mit der Druckluftkammer verbunden sind.

8. Vorrichtung nach einem der vorstehenden Ansprüche, dadurch gekennzeichnet, daß die Nuten (32, 34, 36, 38) Kanten (32a, 32b; 34a, 34b; ...) aufweisen, die dazu bestimmt sind, mit den zur Mittelachse des Werkzeughalters (2) schräg liegenden Referenzflächen (63a, 63b) zur Ausrichtung des Werkzeughalters (2) in x-Richtung und in y-Richtung zusammenzuwirken.

9. Vorrichtung nach einem der vorstehenden Ansprüche, dadurch gekennzeichnet, daß an jeder Nut jeweils zwei gegenüberliegende, axial federnde Lippen (32c, 32d; 34c, 34d; 36c, 36d; 38c, 38d) ausgebildet sind.

10. Vorrichtung nach einem der vorstehenden Ansprüche, dadurch gekennzeichnet, daß die Referenzflächen (52a, 54a, 56a, 58a) in z-Richtung einen Abstand von der Ringfläche (50) besitzen, der innerhalb der axialen Breite der Anlageflächen (63a, 63b) liegt.

11. Vorrichtung nach einem der vorstehenden Ansprüche, dadurch gekennzeichnet, daß die Pfosten (52, 54, 56, 58) radial außerhalb der Leisten (62, 64, 66, 68) angeordnet sind.

12. Vorrichtung nach einem der vorstehenden Ansprüche, dadurch gekennzeichnet, daß jeder Pfosten zwischen je zwei benachbarten Leisten angeordnet ist.

13. Vorrichtung nach einem der vorstehenden Ansprüche, dadurch gekennzeichnet, daß der Zugbolzen (3) in der Mittelbohrung mittels eines Bajonett-Verschlusses gehalten ist.

14. Vorrichtung nach einem der vorstehenden Ansprüche, dadurch gekennzeichnet, daß der Werkzeughalter (2) zur Befestigung des Werkzeugs (9) Bohrungen (42, 44, 46, 48) aufweist, welche innerhalb der mit den Referenzflächen (52a, 54a, 56a, 58a) zusammenwirkenden Stützflächen der Oberfläche (30) angeordnet sind.

15. Vorrichtung nach einem der vorstehenden Ansprüche, dadurch gekennzeichnet, daß jede Leiste mit einem Einsatz aus Hartmetall oder Wolframkarbid versehen sind, an welchem die Referenzflächen ausgebildet sind.

16. Vorrichtung nach einem der vorstehenden Ansprüche, dadurch gekennzeichnet, daß der Werkzeughalter (2) Arretierelemente für den Zugbolzen (3) besitzt, die wenigstens eine in eine Mittelbohrung (40) des Werkzeughalters (2) vorstehende Zunge (102, 104, 106, 108) sowie wenigstens eine am unteren Ende des Zugbolzens radial vorstehende Nase (112, 114, 116, 118) aufweisen und am Zugbolzen ein axial verschiebbarer Schieber (150) in der Nähe seines unteren Endes gehalten ist.

17. Vorrichtung nach Anspruch 16, dadurch gekennzeichnet, daß zwischen je zwei in Umfangsrichtung der Mittelbohrung (40) benachbarten Nuten je eine Zunge ausgebildet ist.

18. Vorrichtung nach Anspruch 16 oder 17, dadurch gekennzeichnet, daß die Mittelbohrung tiefer in den Elektrodenhalter (2) eingeschnitten ist als die Nuten.

19. Vorrichtung nach einem der vorstehenden Ansprüche, dadurch gekennzeichnet, daß vom unteren Ende (14) des Zugbolzens (3) vier umfangmäßig gleich beabstandete Nasen radial vorstehen, wobei die umfangmäßige Breite jeder Nase nicht größer ist als der umfangmäßige Zwischenraum zwischen zwei benachbarten Zungen.

20. Vorrichtung nach einem der vorstehenden Ansprüche, dadurch gekennzeichnet, daß der Werkzeughalter eine Vertiefung zum Einrasten des Schiebers aufweist.

21. Vorrichtung nach Anspruch 20, dadurch gekennzeichnet, daß die Vertiefung eine der Nuten (32, 34, 36, 38) ist, und daß der Schieber (150) eine umfangmäßige Breite hat, die der lichten Weite einer der Nuten entspricht.

22. Vorrichtung nach einem der vorstehenden Ansprüche, dadurch gekennzeichnet, daß der Schieber ein den Zugbolzen umfassender Ring (150) ist, von welchem sich wenigstens ein Finger (142, 144, 146, 148) axial in Richtung auf das untere Ende (14) des Zugbolzens (3) erstreckt.

23. Vorrichtung nach Anspruch 22, dadurch gekennzeichnet, daß der Ring vier umfangmäßig gleich beabstandete Finger aufweist, deren jeweilige umfangmäßige Breite der lichten Weite einer der Nuten entspricht.

24. Vorrichtung nach einem der vorstehenden Ansprüche, dadurch gekennzeichnet, daß der Schieber bezw. der Ring auf dem Zugbolzen unverdrehbar gehalten ist.

25. Vorrichtung nach Anspruch 24, dadurch gekennzeichnet, daß am Umfang des Zugbolzens von seinem unteren Ende (15) ausgehend vier gleich beabstandete Führungsnuten (111, 113, 115, 117) ausgebildet sind, wobei wenigstens einer der Finger (142, 146) mit einer radialen Verdickung in eine der Führungsnuten eintaucht.

26. Vorrichtung nach Anspruch 25, dadurch gekennzeichnet, daß wenigstens eine der Führungsnuten (111, 115) in axialer Richtung kürzer ist als andere Führungsnuten (113, 117), und daß wenigstens der in die kürzere Führungsnut eintauchende Finger radial (144, 148) elastisch ist.

27. Vorrichtung nach einem der vorstehenden Ansprüche, dadurch gekennzeichnet, daß der Schieber bzw. Ring (150) durch ein Federelement in seine Arretierstellung elastisch beaufschlagt ist.

## Claims

1. Clamping device for a workpiece (9) for a machine tool, particularly a die-sinking erosion machine, having a chuck (1) including rails (62, 64, 66, 68) which project from the under side thereof and which are provided with abutment surfaces (63a, 63b) for adjusting the workpiece (9) in a x-direction and a y-direction extending transversely to the center line (1a) of the chuck (1), wherein a plurality of posts (52, 54, 56, 58) project from the under side which include reference surfaces (52a, 54a, 56a, 58a) extending within the x-plane at their free end surfaces, with a tool holder (2) which is provided with a plane surface (30) for abutment of the posts, and with a draw bar (3) adapted to be anchored within the tool holder (2) characterized in that two pairs of rails (62, 64; 66, 68) are formed from the chuck (1) excentrically and angularly offset with respect to each other, and that two pairs of grooves (32, 34; 36, 38) aligned to the rails (62, 64, 66, 68) are cut into the plane surface which are provided with elastic lips (32c, 32d; 34c, 34d; 36c, 36d; 38c, 38d) for abutment to the rails.

2. Device according to claim 1, characterized in that the tool holder has two lateral surfaces (22, 24; 26, 28) one (22, 24) of which extends exactly parallel to a first pair of grooves (32, 34) and the other (26, 28) of which extends exactly parallel to the second pair of grooves (36, 38).

3. Device according to claim 1 or 2, characterized in that the posts (52, 54, 56, 58) are mounted equally spaced to an annular surface (50) of the under side of the chuck.

4. Device according to anyone of the preceding claims, characterized in that each reference surface (52a, 54a, 56a, 58a) is a narrow annular surface.

5. Device according to anyone of the preceding claims, characterized in that each post includes an axial channel (51a) for pressurized air which is coupled to a source of pressurized air connected to the chuck (1).

6. Device according to anyone of the preceding claims, characterized in that a holding device (80) for the draw bar (3) is formed within the chuck (1) which surrounds a draw bar receiving opening (10) and which includes a chamber (94) for pressurized air for clamping the draw bar (3) the chamber being connected to a source of pressurized air.

7. Device according to claim 5 or 6, characterized in that the channels (51a) for pressurized air are connected to the chamber for pressurized air.

8. Device according to anyone of the preceding claims, characterized in that the grooves (32, 34, 36, 38) are provided with edges (32a, 32b; 34a, 34b ...) adapted to cooperate with the reference surfaces (63a, 63b) extending obliquely with respect to the center axis of the tool holder (2) for adjustment of the tool holder (2) in the x-direction and in the y-direction.

9. Device according to anyone of the preceding claims, characterized in that each groove is provided with two opposite axially resilient lips (32c, 32d; 34c, 34d; 36c, 36d; 38c, 38d).

10. Device according to anyone of the preceding claims, characterized in that the reference surfaces (52a, 54a, 56a, 58a) are spaced in z-direction to the annular surface (50) such that the distance is within the axial width of the abutment surfaces (63a, 63b).

11. Device according to anyone of the preceding claims, characterized in that the posts (52, 54, 56, 58) are arranged radially outside the rails (62, 64, 66, 68).

12. Device according to anyone of the preceding claims, characterized in that each post is arranged between two neighbouring rails.

13. Device according to anyone of the preceding claims, characterized in that the draw bar (3) is held within the center bore by a bayonet joint.

14. Device according to anyone of the preceding claims, characterized in that the tool holder (2) is provided with bores (42, 44, 46, 48) for mounting the workpiece (9) which are arranged within the support surfaces of the surface (30) which cooperate with the reference surfaces (52a, 54a, 56a, 58a).

15. Device according to anyone of the preceding claims, characterized in that each rail is provided with an insert of hard metal or tungsten carbide on which the reference surfaces are formed.

16. Device according to anyone of the preceding claims, characterized in that the tool holder (2) has locking elements for the draw bar (3) which include at least one tongue (102, 104, 106, 108) projecting into a center bore (40) of the tool holder (2) and at least one nose (112, 114, 116, 118) projecting radially at the lower end of the draw bar, and that an axially movable slide (150) is held at the draw bar adjacent the lower end thereof.

17. Device according to claim 16, characterized in that tongues are formed each between each two grooves neighbouring in circumferential direction of the center bore (40).

18. Device according to claim 16 or 17, characterized in that the center bore is cut deeper into the electrode holder (2) than the grooves.

19. Device according to anyone of the preceding claims, characterized in that four circumferentially equally spaced noses project radially from the lower end (14) of the draw bar (3), the circumferential width of each nose being not greater than the circumferential gap between two neighbouring tongues.

20. Device according to anyone of the preceding claims, characterized in that the tool holder includes a recess for catching the slide.

21. Device according to claims 20, characterized in that the recess is one of the grooves (32, 34, 36, 38) and that the slide (150) has a circumferential width which corresponds to the inner width of one of the grooves.

22. Device according to anyone of the preceding claims, characterized in that the slide is a ring (150) surrounding the draw bar from which at least one finger (152, 154, 156, 158) extends axially towards the lower end (14) of the draw bar (3).

23. Device according to claim 22, characterized in that the ring includes four circumferentially equally spaced fingers the circumferential width of each finger corresponding to the inner width of one of the grooves.

24. Device according to anyone of the preceding claims, characterized in that the slide and the ring, respectively, is held unrotatably on the draw bar.

25. Device according to claim 24, characterized in that four equally spaced guiding grooves (111, 113, 115, 117) are formed from the periphery of the draw bar and extend from the lower end (15) thereof, at least one of said fingers (142, 146) extending into one of the guiding grooves by a radial thickening thereof.

26. Device according to claim 25, characterized in that at least one of the guiding grooves (111, 115) has a shorter axial extension than different guiding grooves (113, 117), and that at least that finger (144, 148) which extends into the shorter guiding groove is radially elastic.

27. Device according to anyone of the preceding claims, characterized in that the slide and the ring (150), respectively, is urged elastically into its locking position by a spring element.

## Revendications

1. Dispositif de serrage d'un outil (9) pour une machine-outil, en particulier une machine à érosion verticale, comprenant un mandrin de serrage (1) qui comporte des nervures (62, 64, 66, 68) qui dépassent de sa partie inférieure et qui sont munies de surfaces d'appui (63a, 63b) qui permettent d'agligner l'outil (9) dans un sens x et dans un sens y qui sont transversales à l'axe médian (1a) du mandrin de serrage, plusieurs montants (52, 54, 56, 58) faisant saillie sur la partie inférieure et comportant, sur leurs surfaces avant libres, des surfaces de référence (52a, 54a, 56a, 58a) s'étendant dans le plan x–y, comprenant un porte-outil (2) qui comporte une surface plane (30) pour l'appliquer contre les montants, et comprenant un goujon de traction (3) ancré dans le porte-outil (2), caractérisé en ce que deux paires de nervures (62, 64; 66, 68) sont disposées de manière excentrique et avec un décalage angulaire l'une par rapport à l'autre sur le mandrin de serrage (1), et en ce que deux paires de gorges (32, 34; 36, 38), alignées sur les nervures (62, 64, 66, 68) et munies de lèvres élastiques (32c, 32d; 34c, 34d; 36c, 36d; 38c, 38d) destinées à être appliquées contre les nervures, sont pratiquées dans la surface plane.

2. Dispositif conforme à la revendication 1, caractérisé en ce que le porte-outil comporte deux surfaces latérales (22, 24; 26, 28) dont l'une (22, 24) est exactement parallèle à une première paire de gorges (32, 34) et l'autre (26, 28) est exactement parallèle à la seconde paire de gorges (36, 38).

3. Dispositif conforme à la revendication 1 ou 2, caractérisé en ce que les montants (52, 54, 56, 58) sont fixés à une distance identique sur une surface annulaire (50) disposée sur la partie inférieure du mandrin de serrage.

4. Dispositif conforme à l'une des revendications précédentes, caractérisé en ce que chaque surface de référence (52a, 54a, 56a, 58a) est une surface annulaire étroite.

5. Dispositif conforme à l'une des revendications précédentes, caractérisé en ce que chaque montant entoure un canal axial à air comprimé (51a) qui est relié à une source d'air comprimé connectée au mandrin de serrage (1).

6. Dispositif conforme à l'une des revendications précédentes, caractérisé en ce que, dans le mandrin de serrage (1), est réalisé un dispositif de retenue (80) du goujon de traction (3), qui entoure le logement de goujon de traction (10) et qui, pour serrer le goujon de traction (3), comporte une chambre à air comprimé (94) qui est reliée à une source d'air comprimé.

7. Dispositif conforme à la revendication 5 ou 6, caractérisé en ce que les canaux à air comprimé (51a) sont reliés à la chambre à air comprimé.

8. Dispositif conforme à l'une des revendications précédentes, caractérisé en ce que les gorges (32, 34, 36, 38) comportent des bords (32a, 32b; 34a, 34; ...) qui sont destinés à coopérer avec les surfaces de référence (63a, 63b) disposées en oblique par rapport à l'axe médian du porte-outil (2), pour aligner le porte-outil (2) dans le sens x et dans le sens y.

9. Dispositif conforme à l'une des revendications précédentes, caractérisé en ce que, sur chaque gorge, sont prévues deux lèvres opposées et élastiques axialement (32c, 32d; 34c, 34d; 36c, 36d; 38c, 38d).

10. Dispositif conforme à l'une des revendications précédentes, caractérisé en ce que, dans le sens z, les surfaces de référence (52a, 54a, 56a, 58a) possèdent un écartement par rapport à la surface annulaire (50), qui se trouve à l'intérieur de la largeur axiale des surfaces d'appui (63a, 63b).

11. Dispositif conforme à l'une des revendications précédentes, caractérisé en ce que les montants (52, 54, 56, 58) sont disposés radialement à l'extérieur des nervures (62, 64, 66, 68).

12. Dispositif conforme à l'une des revendications précédentes, caractérisé en ce que chaque montant est disposé entre deux nervures voisines.

13. Dispositif conforme à l'une des revendications précédentes, caractérisé en ce que le goujon de traction (3) est maintenu dans le perçage central au moyen d'un emboîtement à baïonnette.

14. Dispositif conforme à l'une des revendications précédentes, caractérisé en ce que, pour fixer l'outil (9), le porte-outil (2) comporte des perçages (42, 44, 46, 48) qui sont disposés à l'intérieur des surfaces d'appui de la surface (30) qui coopèrent avec les surfaces de référence (52a, 54a, 56a, 58a).

15. Dispositif conforme à l'une des revendications précédentes, caractérisé en ce que chaque nervure est munie d'une pièce rapportée en métal dur ou en carbure de tungstène sur laquelle sont réalisées les surfaces de référence.

16. Dispositif conforme à l'une des revendications précédentes, caractérisé en ce que le porte-outil (2) possède des éléments d'arrêt pour le goujon de traction (3), qui comportent au moins une languette (102, 104, 106, 108) faisant saillie dans un perçage central (40) du porte-outil (2) ainsi qu'au moins un talon (112, 114, 116, 118) faisant saillie radialement à l'extrémité inférieure du goujon de traction, et un coulisseau pouvant coulisser axialement (150) est maintenu sur le goujon de traction à proximité de son extrémité inférieure.

17. Dispositif conforme à la revendication 16, caractérisé en ce qu'une languette est prévue entre deux gorges voisines dans le sens circonférentiel du perçage central (40).

18. Dispositif conforme à la revendication 16 ou 17, caractérisé en ce que le perçage central est réalisé plus profondément dans le porte-électrode (2) que les gorges.

19. Dispositif conforme à l'une des revendications précédentes, caractérisé en ce que quatre talons équidistants dans le sens circonférentiel dépassent radialement de l'extrémité inférieure (14) du goujon de traction 13, la largeur circonférentielle de chaque talon n'étant pas supérieure à l'espace circonférentiel entre deux languettes voisines.

20. Dispositif conforme à l'une des revendications précédentes, caractérisé en ce que le porte-outil comporte un évidement pour encliqueter le coulisseau.

21. Dispositif conforme à la revendication 20, caractérisé en ce que l'évidement est l'une des gorges (32, 34, 36, 38), et en ce que le coulisseau (150) a une largeur circonférentielle qui correspond à l'ouverture libre de l'une des gorges.

22. Dispositif conforme à l'une des revendications précédentes, caractérisé en ce que le coulisseau est un anneau (150) qui entoure le goujon de traction et duquel au moins un doigt (142, 144, 146, 148) s'étend axialement en direction de l'extrémité inférieure (14) du goujon de traction (3).

23. Dispositif conforme à la revendication 22, caractérisé en ce que l'anneau comporte quatre doigts équidistants dans le sens circonférentiel, dont la largeur circonférentielle respective correspond à la largeur circonférentielle de l'ouverture libre de l'une des gorges.

24. Dispositif conforme à l'une des revendications précédentes, caractérisé en ce que le coulisseau ou, respectivement, l'anneau est maintenu immobilisé en rotation sur le goujon de traction.

25. Dispositif conforme à la revendication 24, caractérisé en ce que quatre gorges de guidage (111, 113, 115, 117) sont réalisées sur la circonférence du goujon de traction en partant de son extrémité inférieure (15), au moins l'un des doigts (142, 146) s'engageant dans l'une des gorges de guidage avec une surépaisseur radiale.

26. Dispositif conforme à la revendication 25, caractérisé en ce qu'au moins l'une des gorges de guidage (111, 115) est plus courte dans le sens axial que d'autres gorges de guidage (113, 117), et en ce qu'au moins le doigt (144, 148) s'engageant dans la gorge de guidage plus courte est élastique radialement.

27. Dispositif conforme à l'une des revendications précédentes, caractérisé en ce que le coulisseau ou, respectivement, l'anneau (150) est sollicité élastiquement dans sa position d'arrêt par un élément élastique.

EP 0 255 042 B1

*Fig. 1*

*Fig. 2*

Fig. 3

Fig. 4

Fig. 5

*Fig. 6*

*Fig. 7*

Fig. 8

EP 0 255 042 B1

Fig. 9

Fig. 10